# NEUE EUROPÄISCHE PATENTSCHRIFT

(11) **EP 0 986 610 B2**
(45) Veröffentlichungstag und Bekanntmachung des Hinweises auf die Entscheidung über den Einspruch: **21.04.2010**
(45) Hinweis auf die Patenterteilung: 17.09.2003
(21) Anmeldenummer: 98925619.3
(22) Anmeldetag: 20.05.1998
(51) Int. Cl.: C08L 23/16

(54) **POLYMERMISCHUNG**
POLYMER MIXTURE
MELANGE POLYMERE

(30) Priorität: 02.06.1997 DE 19723003
(43) Veröffentlichungstag der Anmeldung: 22.03.2000
(73) Patentinhaber: Basell Polyolefine GmbH, 50389 Wesseling (DE)
(72) Erfinder: BAUER, Peter, D-67071 Ludwigshafen (DE); LUX, Martin, D-67125 Dannstadt-Schauernheim (DE); LILGE, Dieter, D-67117 Limburgerhof (DE)
(74) Vertreter: Reiss, Gilles François
(86) Internationale Anmeldenummer: PCT/EP1998/002948
(87) Internationale Veröffentlichungsnummer: WO 1998/055546

(56) Entgegenhaltungen:
- EP-A- 0 575 123
- EP-A- 0 737 713
- WO-A-95/10566
- WO-A-95/27005
- US-A- 5 530 065
- "ADVANTAGES OF METALLOCENE ETHYLENE POLYMER RESIN BLENDS IN BLOWN AND CAST FILMS" RESEARCH DISCLOSURE, Nr. 376, 1. August 1995, Seiten 565-573, XP000527846

## Beschreibung

Gegenstand der vorliegenden Erfindung sind Polymermischungen enthaltend
mindesten 85 Gew.-% durch Metallocenkatalyse hergestellte Ethylen/C₃-C₂₀-α-Olefine-Copolymere (A) mit einer Dichte von 0.91 bis 0.925 g/cm³ und einem HLMI von 10 bis 40 g/10 min. enthaltend 97 bis 75 Gew.-% Ethylen- und 3 bis 25 Gew.-% C₃-C₂₀-α-Olefineinheiten, jeweils bezogen auf die Gesamtmasse der Komponente A) und
1 bis 15 Gew.-% im wesentlichen lineare Ethylen/C₃-C₂₀-α-Olefin-copolymere (B) mit einer Dichte von 0,930 bis 0,940 g/cm³, welche mit einem Chromkatalysator hergestellt werden, jeweils bezogen auf die Gesamtmasse der Polymermischung.

Weiterhin ist Gegenstand der vorliegenden Erfindung die Verwendung dieser Polymermischungen zur Herstellung von Folien sowie Folien, welche diese Polymermischungen enthalten.

Ethylen/α -Olefin-Copolynere, die durch Metallocenkatalyse hergestellt werden, weisen gegenüber mittels konventioneller Katalysatorsysteme hergestellten Copolymeren einige vorteilhafte Eigenschaften auf. So sind die Metallocen-Copolymere-hinsichtlich ihrer mechanischen Eigenschaften wie Zähigkeit anders hergestellten Copolymeren ähnlicher Zusammensetzung oft überlegen. Die hervorragenden mechanischen Eigenschaften lassen Metallocan-Copolymere besonders für die Herstellung von Folien geeignet erscheinen. Besonders bei der Herstellung von Folien werden auch an die optischen Eigenschaften der verwendeten Polymere hohe Anforderungen gestellt. Dabei machen sich bei reinen Metallocen-Copolymeren wie auch bei konventionell hergestelltem LLDPE oft eine leichte Trübheit sowie ungenügender Glanz bemerkbar.

um die optischen Eigenschaften von LLDPE-Copolymeren zu verbessern, wurden diesen Copolymeren andere Polyniere zugemischt. In US-A-4 587 303 wird eine Polymermischung aus LLDPE und radikalisch polymerisiertem LDPE oder Ethylencopolymeren aus Hochdruckprozessen beschrieben. Diese Hochdruokpolymeren zeichnen sich durch langkettige Verzweigungen aus, woraus u. a. ihre niedrige Dichte resultiert. In WO 95/27005 wird eine Polymermischung aus LLDPE, welches durch Metallocen-Katalyse hergestellt wurde, und. Hochdruckpolyethylen beschrieben. Die genannten Polymermischungen zeigen zwar in bezug auf reines Metallocen-Copolymer verbesserte optische Eigenschaften. Diese Verbesserung wird jedoch von einer drastischen Verschlechterung der mechanischen Eigenschaften begleitet.

Die WO 95/10556 offenbart Folien aus Mischungen, die Ethylen/C₄-C₁₀ Copolymere enthalten, welche mittels eines single site Katalysators hergestellt werden, Mischungen aus diesen Polymeren und Ethylencopolymere, welche mittels eines Chrom- oder Ziegler-Katalysators hergestellt werden, sind nicht beschrieben.

In der EP-A-575123 werden Polymennischungen beschrieben, enthaltend Ethylencopolymere, welche mittels eines Metallocenkatalysators hergestellt werden. Mischungen die zusätzlich Ethylencopolymere bestimmter Dichte enthalten, welche mittels eines Chrom-oder Ziegler-Katalysators hergestellt werden, sind nicht beschrieben.

Der vorliegenden Erfindung lag daher die Aufgabe zugrunde, Polymennischungen auf der Grundlage von durch Metallocen-Katalyse hergestellten Ethylen/α-Olefin Copolymeren bereitzustellen, welche einerseits bessere optische Eigenschaften als reine Metallocen-Copolymere aufweisen und dabei andereseits gute mechanische Eigenschaften zeigen.

Demgemäß wurden die eingangs genannten Polymermischungen, ihre Vervendung zur Herstellung von Folien sowie Folien, welche diese Polymermischungen enthalten, gefunden.

Als Copolymere (A) kommen durch Metallocen-Katalyse hergestellte Ethylen/α-Olefin-Copolymere in Betracht.

Die Polymerisation Kann dabei z,B. in der Gasphase, in Suspension, in Lösung oder im BochdruckprozeB erfolgen, wobei als Katalysatorsystem in Suspensions- oder Gasphaaenverfahren vorzugsweise ein solches verwendet wird, das
a) einen anorganischen oder organischen Träger,
b) einen Metallocenkomplex und
c) eine metalloceniumionanbildende Verbindung enthält

Als Trägennaterialien a) werden vorzugsweise feinteilige Träger eingesetzt, die bevorzugt einen Teilchendurchmesser im Bereich von 1 bis 300 µm aufweisen, insbesondere von 30 bis ·70 µm. Geeignete anorganische Träger sind beispielsweise Magnesiunchlorid oder Kieselgele, bevorzugt solche der. Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace. Als organische Träger sind beispielsweise feinteilige Polyolefine geeignet, z.B. feinteiliges Polypropylen.

Die Menge an Träger beträgt vorzugsweise 50 bis 99,9 Gew.-%, bezogen auf die Gesamtmasse von Träger und Metallocenkomplex (Komponente b).

Als Metallocenkomplexe b) eignen sich besonders solche der allgemeinen Formel I 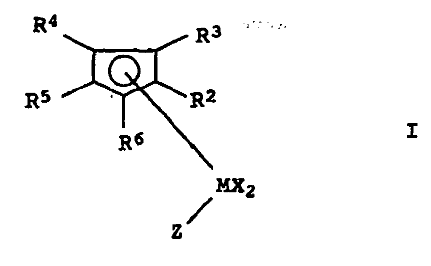 in der die Substituenten folgende Bedeutung haben:
- M: Titan, Zirkonium, Hafnium, Vanadium, Niob oder Tantal
- X: Fluor, Chlor, Brom, Iod, Wasserstoff, C₁- bis C₁₀-Alkyl, C6- bis C₁₅-Aryl, Alkylaryl mit 1 bis 10 C-Atomen im Alkylrest und 6 bis 20 C-Atomen im Arylrest, -OR⁷ oder -NR⁷R⁸,
wobei
- R⁷ und R⁸: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R² bis R⁶: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁹)3 mit
- R⁹: C₁- bis C₁₀-Alkyl, C₃- bis C₁₀-Cycloalkyl oder C₆- bis C₁₅-Aryl,
- Z: für X oder 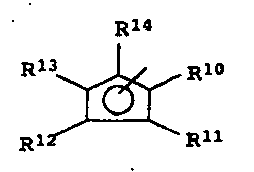 steht,
wobei die Reste
- R¹⁰ bis R¹⁴: Wasserstoff, C₁- bis C₁₀-Alkyl,
5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁵)₃ mit
- R¹⁵: C₁- bis C₁₀-Alkyl, C6- bis C₁₅-Aryl oder C₃- bis C₁₀-Cycloalkyl,
oder wobei die Reste R⁵ und Z gemeinsam eine Gruppierung -R¹⁶-Abilden, in der 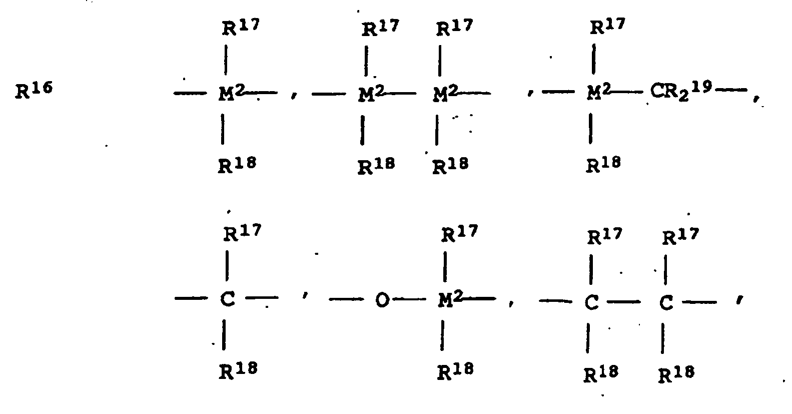 = BR¹⁷, = A1R¹⁷, -Ge-, -Sn-, -O-, -S-, = SO, = SO_{2,} = NR¹⁷, = CO, = PR¹⁷ oder = P(O)R¹⁷ ist,
wobei
- R¹⁷, R¹⁸ und R¹⁹: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀ -Alkenylgruppe, eine C₇-C₄₀-Arylalkylgruppe, eine C₈-C₄₀-Aryl-alkenylgruppe oder eine C₇-C₄₀-Alkylarylgruppe bedeuten oder wobei zwei benachbarte Reste jeweils mit den sie verbindenden Atomen einen Ring bilden, und
- M²: Silicium, Germanium oder Zinn ist,
- A¹: ―O―, ―S―, 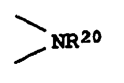 oder 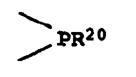 bedeuten, mit
- R²⁰: C₁- bis C₁₀-Alkyl, C₆- bis C₁₅-Aryl, C₃- bis C₁₀-Cycloalkyl, Alkylaryl oder Si(R²¹)₃,
- R²¹: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁵ und R¹³ gemeinsam eine Gruppierung -R¹⁶bilden.

Von den Metallocenkomplexen der allgemeinen Formel I sind 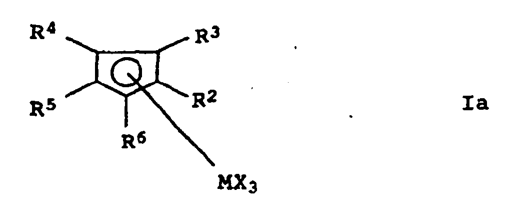 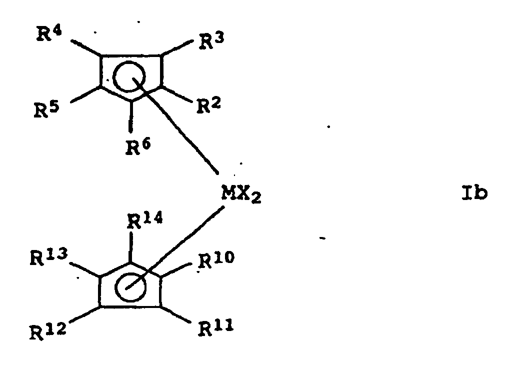 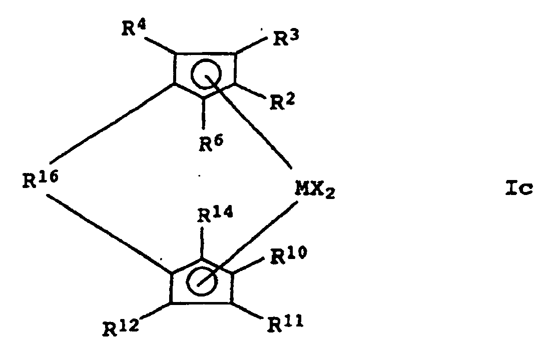 und 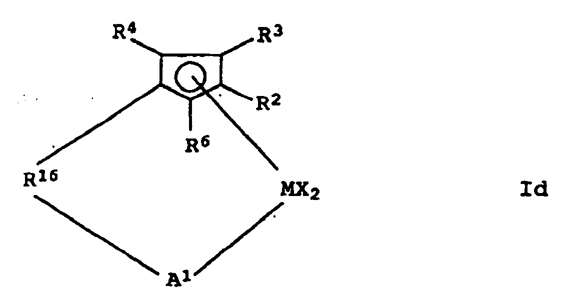 bevorzugt.

Besonders bevorzugt sind solche Übergangsmetallkomplexe, welche zwei miteinander verbrückte aromatische Ringsysteme als Liganden enthalten, also besonders die Übergangsmetallkomplexe der allgemeinen Formel Ic.

Die Reste X können gleich oder verschieden sein, bevorzugt sind sie gleich.

Von den Verbindungen der Formel Ia sind insbesondere diejenigen bevorzugt, in denen
- M: Titan, Zirkonium oder Hafnium,
- X: Chlor, C₁-bis C₄-Alkyl oder Phenyl und
- R² bis R⁶: Wasserstoff oder C₁- bis C₄-Alkyl bedeuten.

Von den Verbindungen der Formel Ib sind als bevorzugt diejenigen zu nennen, bei denen
- M: für Titan, Zirkonium oder Hafnium steht,
- X: für Chlor, C₁-bis C₄-Alkyl oder Phenyl,
- R² bis R⁶: Wasserstoff, C₁- bis C₄-Alkyl oder Si(R⁹)₃,
- R¹⁰ bis R¹⁴: Wasserstoff, C₁- bis C₄-Alkyl oder Si(R¹⁵)₃ bedeuten.

Insbesondere sind die Verbindungen der Formel Ib geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentädienyl)-zirkoniumdichlorid,
Bis (methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis (trimethylsilylcyclopentadienyl)-zirkoniumdichlorid
sowie die entsprechenden Dimethylzirkoniumverbindungen.

Von den Verbindungen der Formel Ic sind diejenigen besonders geeignet, in denen
- R² und R¹⁰: gleich sind und für Wasserstoff oder C₁- bis C₁₀-Alkylgruppen stehen,
- R⁶ und R¹⁴: gleich sind und für Wasserstoff, eine Methyl-, Ethyl-, iso-Propyl- oder tert.-Butylgruppe stehen
- R³, R⁴, R¹¹ und R¹²: die Bedeutung
R⁴ und R¹² C₁- bis C₄-Alkyl
R³ und R¹¹ Wasserstoff
haben oder zwei benachbarte Reste R³ und R⁴ sowie R¹¹ und R¹² gemeinsam für 4 bis 12 C-Atome aufweisende cyclische Gruppen stehen,
- R¹⁶: für 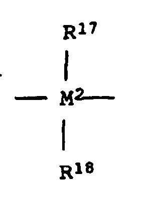 oder 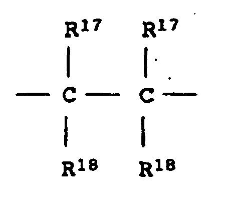 steht,
- M: für Titan, Zirkonium oder Hafnium und
- X: für Chlor, C₁-bis C₄-Alkyl oder Phenyl stehen.

Beispiele für besonders geeignete Komplexverbindungen sind u.a. Dimethylsilandiylbis(cyclopentadienyl)-zirkoniumdichlorid,
5 Dimethylsilandiylbis(indenyl)-zirkoniumdichlorid,
Dimethylsilandiylbis(tetrahydromdenyl)-zirkoniumdichlorid,
Ethylenbis(cyclopentadienyl)-zirkoniumdichlorid,
Ethylenbis (indenyl) -zirkoniumdichlorid,
Ethylenbis(tetrahydroindenyl)-zirkoniumdichlorid,
3 Tetramethylethylen-9-fluorenylcyclopentadienylzirkoniumdichlorid,
Dimethylsilandiylbis (-3-tert. butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis (-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis (-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-methylindenyl)-zirkoniumdichlorid,
Dimethylsilandiylbis(-2-methylbenzindenyl)-zirkoniumdichlorid
Dimethylsilandiylbis(2-ethylbenzindenyl)zirkoniumdichlorid,
Methylphenylsilandiylbis(2-ethylbenzindenyl)zirkoniumdichlorid,
Methylphenylsilandiylbis ( 2-methylbenzindenyl)zirkoniumdichlorid,
Diphenylsilandiylbis(2-methylbenzindenyl)zirkoniumdichlorid,
Diphenylsilandiylbis(2-ethylbenzindenyl)zirkoniumdichlorid, und
Dimethylsilandiylbis (-2-methylindenyl)-hafniumdichlorid
sowie die entsprechenden Dimethylzirkoniumverbindungen.

Bei den Verbindungen der allgemeinen Formel Id sind als besonders geeignet diejenigen zu nennen, in denen
- M: für Titan oder Zirkonium,
- X: für Chlor, C₁-bis C₄-Alkyl oder Phenyl stehen,
- R¹⁶: für 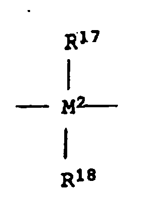 oder 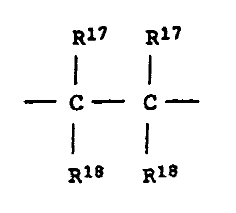 steht,
- A¹: für ―O― , ―S― , 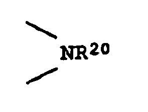
und
- R² bis R⁴ und R⁶: für Wasserstoff, C₁- bis C₁₀-Alkyl, C₃- bis C₁₀-Cycloalkyl, C₆- bis C₁₅-Aryl oder Si(R⁹)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Geeignete metalloceniumionen-bildende Verbindungen c) sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel II

M³X¹X²X³ II

bevorzugt, in der
- M³: ein Element der III. Hauptgruppe des Periodensystems bedeutet, insbesondere B, A1 oder Ga, vorzugsweise B,
- X¹, X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel II, in der X¹, X² und X³ gleich sind, vorzugsweise Tris(pentafluorphenyl)boran.

Als ionische Verbindungen mit lewissauren Kationen sind Verbindungen der allgemeinen Formel III

[(Y^{a+})Q₁Q₂...Q_{z}]^{d+} III

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils
6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz α-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N.N-Dimethylanilinium.

Besonders geeignet als metalloceniumionen-bildende Verbindung sind offenkettige oder cyclische Alumoxanverbindungen der allgemeinen Formel IV oder V 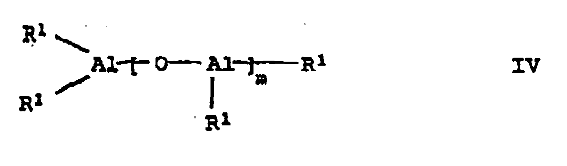 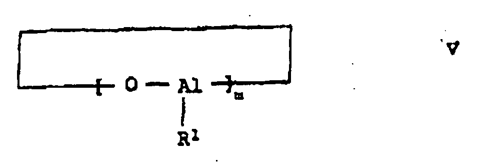 wobei
- R¹: eine C₁- bis C₄-Alkylgruppe bedeutet, bevorzugt eine Methyl- oder Ethylgruppe und m für eine ganze zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

weiterhin können als metalloceniumionen-bildende Verbindungen Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der Ep-A 621 279 beschrieben, oder Mischungen daraus eingesetzt werden.

Die vorzugsweise mittels der genannten Katalysator Systeme herstellbaren Copolymerisate A) enthalten bevorzugt 97 bis 75 Gew.-% Ethylen- und 3 bis 25 Gew.-% C₃-C₂₀-α-Olefineinheiten, jeweils bezogen auf die Gesamtmasse der Komponente A). Besonders bevorzugt enthalten diese Copolymerisate 97 bis 85 Gew.-% Ethyien- und 3 bis 15 Gew.-% C₃-C₂₀-α-Olefineinheit.

Als C₃-C₂₀-α-Olefine, die als Comonomere dieser Copolymere dienen, können alle linearen oder verzweigten a-Isomere von Propen, Buten, Penten, Hexen, Hepten, Octen, Nonen, Decen, Undecen, Dodecen, Tridecen, Tetradecen, Pentadecen, Bexadecen, Heptadecen, Octadecen, Nonadecen und Eicosen eingesetzt werden. Bevorzugte C₃-C₂₀-α-olefincomonomere sind solche aus der Gruppe Buten, Penten, Hexen, 4-Methylpenten und Octen, besonders bevorzugt sind Buten, Penten und Hexen.

Besonders bevorzugte Copolymere (A) sind Ethylen/Buten-Copolymere mit einein Butengehalt von 4 - 8 Gew.-% und Ethylen/Hexen-Copolymere mit einem Hexengehalt von 4-8 Gew.-% jeweils bezogen auf die Gesamtmasse dieser Copolymeren.

Weiterhin sind solche Copolymere (A) bevorzugt, die eine Molekulargewihtsverteilung M_{w}/Mₙ < 3,5 aufweisen.

Besonders vorteilhaft für die Verwendung in Folien sind ferner Copolymere (A) mit einer Dichte von 0,91 - 0,925 und einem HLMI (High Load Meltflow Index) von 10 - 40 g/10 min.

Als Copolymere (B) kommen im wesentlichen lineare Ethylen/α-Olefin-Copolymere in Betracht, wie
Ethylencopolymere mittlerer Dichte <PE-MD) im Bereich von 0,930 bis 0,940, insbesondere solche PE-MD-Copolymere, die mittels Chromkatalysatoren hergestellt werden. Derartige Chromkatalysatoren, auch Phillipskatalysatoren genannt, sind allgemein bekannt, (s. z.B. M. P. Mc Daniel, Adv. Cat 33, 47- 98 (19B5) und US-A- 5 363 915). Als Comonomere können diese Copolymeren die oben genannten C₃-C₂₀-α-Olefine enthalten, wobei auch hier Hexen und Buten, insbesondere Hexen bevorzugt ist.

Die PE-MD-Copolymere haben vorzugsweise einen HLMI von 2 - 100, besonders bevorzugt von 10 - 30 g/10 min.

Weiterhin zu nennen als Copolymere (B) sind LLDPE-Copolymere mit einer Dichte von 0,915 bis 0,929, insbesondere solche, die mit einem Zieglerkatalysator hergestellt werden. Übliche Katalysatoren dieser Art werden beispielsweise in Ullmann's Encyclopedia of Industrial Chemistry, Vol. A 21, 4. Aufl. 1992, S. 502 ff, beschrieben. Besonders sollen hier solche Katalysatoren genannt werden, wie sie z. B. in US-A-4857613 sowie in DE-A-19 529 240 beschrieben werden.

Die durch Ziegierkatalyse erhältlichen LLDPE-Copolyroere können nach allen üblichen Polymerisatsonstertahren hergestellt werden, wobei Lösungsverfahren und Gasphasenverfahren, insbesondere Gasphasenwirbelschichtverfahren besonders bevorzugt sind. Als Comonomere können diese Copolymere wiederum die obengenannten α-Olefine enthalten, vorzugsweise Buten, Hexen oder Octen

Neben den Copolymeren (A) und (B) können die erfindungsgemäßen Polymermischungen noch weitere Zusatzstoffe enthalten wie Stabilisatoren gegen Licht- und Witterungseinflüsse, Verarbeitungshilfsmittel und gewünschtenfalls Farbstoffe. Art und Menge dieser Zusatzstoffe sind dem Fachmann geläufig.

Die erfindungsgemäßen Polymermischungen enthalten die Copolymerkomponente (B) in einer Konzentration von 1-15 Gew.-%, vorzugsweise 2 - 10 Gew.-%, bezogen auf die Gesamtmasse der Polymermischung.

Die Mischung der Copolymerkomponenten (A) und (B) kann nach allen bekannten Mischverfahren erfolgen. Üblicherweise werden die grießförmigen Polymerkomponenten, gewünschtenfalls zusammen mit weiteren Zusatzstoffe, in einem Zweischneckenextruder (2SK) in den gewünschten Mengenverhältnissen vermengt und zu Granulaten verarbeitet. Diese Granulate können dann z. B. in Blasfolienanlagen zu Folien verarbeitet werden.

Die erfindungsgemäßen Polymermischungen eignen sich hervorragend zur Herstellung von Folien, insbesondere für den Verpackungsbereich und dabei besonders für die Verpackung von Lebensmitteln. Die erhaltenen Folien zeichnen sich durch Klarheit, Glanz und gute mechanische Eigenschaften, insbesondere durch hohe Reißfestigkeit aus. Dabei zeigen sie nur geringe Blockneigung und sind daher bequem zu verarbeiten. Die folgenden Beispiele erläutern die Erfindung.

### Beispiele

In einem Schleifenreaktor wurden durch Suspensionspolymerisation mit einem geträgerten Metallocenkatalysator die folgenden Ethylen-Copolyniere hergestellt:

### Copolymer A1

### Ethylen/Hexen-Copolymer

| | | | |
|---|---|---|---|
| HLMI | 27,4 g/10' | Mw. | 126 000 g/mol |
| Dichte | 0,916 g/cm³ | Mn | 51 000 g/mol |
| Hexengehalt | 5,5 Gew.-% | Mw/Mn | 2,47 |

### Copolymer A2:

### Ethylen/Buten-Copolymer

| | | | |
|---|---|---|---|
| HLMI | 26,0 g/10' | Mw | 111 000 g/mol |
| 5 Dichte | 0,919 g/cm³ | Mn | 43 000 g/mol |
| Butengehalt | 6,3 Gew.-% | Mw/Mn | 2,58 |

Als Mischkomponenten (B) wurden die folgenden mit konventionellen Katalysatoren hergestellten linearen Ethylen-Copolymere bereitge-stellt :

### Copolymer B1

PE-MD, hergestellt durch Phillipskatalyse mit Hexen als Comonomer (Lupolen® 3821 D, Hersteller: Rheinische Olefinwerke, Wesseling, Germany)

| | |
|---|---|
| HLMI | 20 g/10' |
| Dichte | 0,938 g/cm³ |

Aus den grießförmigen Polymerkomponenten wurden auf einem ZSK die in der Tabelle angegebenen Mischungen hergestellt. Aus den erhaltenen Granulaten wurden auf einer 30 mm-Troester-Blasfolien-anlage 50 µm dicke Folien hergestellt (Düse 50 mm, Düsenspalt 2 mm, Temperaturprofil 180, 190, 200, 3 x 210°C, Ausstoß 5 kg/h, Aufblasverhältnis 2:1).

Die Tabelle gibt Auskunft über die durchgeführten Versuche und die Eigenschaften der hergestellten Folien. (Alle %-Werte sind Gew.-% bezogen auf die Gesamtmenge der Polymermischung.)

**Tabelle: Folienprüfung der hergestellten Blasfolien**

| Beispiel | Mischung | Trübheit ISO 6427 | Glanz ISO 2813 >20° % | Reibungswert DIN 67530 | Blockkraft DIN 53366 N | Dart Drop ASTM D 1709 g | Reißfestigkeit längs/quer ISO 527 N/mm² | Reißdehnung längs/quer ISO 527 % |
|---|---|---|---|---|---|---|---|---|
| 1 | 98 % A1 + 2 % B1 | 9 | 72 | 258 | 50 | 609 | 56/53 | 787/808 |
| | 95 % A1 + 5 % B1 | 7 | 83 | 236 | 49 | 664 | 58/55 | 784/833 |
| 3 | 90 % A1 + 10 % B1 | 7 | 77 | 161 | 17 | 611 | 58/54 | 798/838 |
| 4 | 90 % A2 + 10 % B1 | 8 | 68 | 133 | 0 | 163 | 43/37 | 913/951 |
| Vergleichs bsp. 1 | 100 % A1 (40 µm) | 14 | 33 | -)* | -)** | >1430 | 68/60 | 766/793 |
| Vergleichs bsp. 2 | 100 % A2 (40 µm) | 29 | 16 | -)* | -)** | 172 | 43/41 | 894/987 |

| | | | | | | | | |
|---|---|---|---|---|---|---|---|---|
| )* unmeßbar hoch )** unmeßbar hoch (>200 N) | | | | | | | | |

## Patentansprüche

1. Polymermischung enthaltend mindestens 85 Gew.-% durch Metallocenkatalyse hergestellte Ethylen/C₃-C₂₀-α-Olefin-Copolymere (A) mit einer Dichte von 0,91 bis 0,925 g/cm³ und einem HLMI von 10 bis 40 g/10 min., enthaltend 97 bis 75 Gew.-% Ethylen- und 3 bis 25 Gew.-% C₃-C₂₀-α-Olefineinheiten, jeweils bezogen auf die Gesamtmasse der Komponente A),
und
1 bis 15 Gew.-% im wesentlichen lineare Ethylen/ C₃-C₂₀-α-Olefin-Copolymere (B) mit einer Dichte von 0,930 bis 0,940 g/cm³, welche mit einem Chromkatalysator hergestellt werden, jeweils bezogen auf die Gesamtmasse der Polymermischung.

2. Polymermischungen nach Anspruch 1, **dadurch gekennzeichnet, daß** als Copolymere (A) Ethylen/Hexen-Copolymere mit einem Hexengehalt von 4-8 Gew.-%, bezogen auf die Gesamtmasse dieser Copolymeren, enthalten sind.

3. Polymermischungen nach Anspruch 1, **dadurch gekennzeichnet, daß** als Copolymere (A) Ethylen/Buten-Copolymere mit einem Butengehalt von 4-8% Gew.-%, bezogen auf die Gesamtmasse dieser Copolymeren, enthalten sind.

4. Verwendung einer Polymermischung gemäß den Ansprüchen 1 bis 3 zur Herstellung von Folien.

5. Folien enthaltend eine Polymermischung gemäß den Ansprüchen 1 bis 3.

## Claims

1. A polymer blend comprising at least 85% by weight of ethylene/C₃-C₂₀-α-olefin copolymers (A) prepared by metallocene catalysis and having a density of from 0.91 to 0.925 g/cm³ and a HLMI of from 10 to 40 g/10 min., comprising of from 97 to 75% by weight of ethylene units and from 3 to 25% by weight of ethylene/C₃-C₂₀-α-olefin units, based in each case on the toal mass of the component A),
and
from 1 to 15% by weight of substantially linear ethylene/C₃-C₂₀-α-olefin copolymers (B) having a density of from 0.930 to 0.940 g/cm³ and prepared using a chromium catalyst, based in each case on the total mass of the polymer blend.

2. A polymer blend as claimed in claim 1, wherein ethylene/hexene copolymers having a hexene conent of 4-8% by weight, based on the total mass of these copolymers, are present as copolymers (A).

3. A polymer blend as claimed I nclaim 1, wherein ethylene/butene copolymers having a butene conent of 4-8% by weight, based on the total mass of these copolymers, are present as copolymers (A).

4. The use of a polymer blend as claimed in any of claims I to 3 for the production of films.

5. A film comprising a polymer blend as claimed in any of the claims 1 to 3.

## Revendications

1. Mélanges de polymères contenant au moins 85% en poids de copolymères (A) d'éthylène/α-oléfine en C₃-C₂₀ préparés par catalyse au métallocène ayant une masse volumique de 0.91 à 0.925 g/cm³ et une HLMI de 10 à 40 g/10 min., contenant de 97 à 75% en poids d'unités éthylène et de 3 à 25% en poids d'unités α-oléfine en C₃-C₂₀, toujours relatif à la masse totale du composant A),
et
de 1 à 15% en poids de copolymères (B) d'éthylène/α-oléfine en C₃-C₂₀, ayant une masse volumique de 0.930 à 0.940 g/cm³ ,lesquels sont essentiellement linéaires et sont préparés avec un catalyseur au chrome, à chaque fois par rapport à la masse totale dudit mélange de polymères.

2. Mélanges de polymères selon la revendication 1, **caractérisés par le fait que** ce sont contenus comme copolymères (A) des copolymères d' éthylène/hexène ayant une teneur en hexène de 4 - 8 % en poids, relatif à la masse totale de ces copolymères.

3. Mélanges de polymères selon la revendication 1, **caractérisés par le fait que** ce sont contenus comme copolymères (A) des copolymères d' éthylène/butène ayant une teneur en butène de 4 - 8 % en poids, relatif à la masse totale de ces copolymères.

4. Utilisation d'un mélange de polymères selon les revendications 1 à 3 pour la préparation des feuilles.

5. Feuilles contenant un mélange de polymères selon les revendications 1 à 3 .
